# EUROPEAN PATENT SPECIFICATION

(11) **EP 4 089 973 B1**
(45) Date of publication and mention of the grant of the patent: **02.07.2025**
(21) Application number: 21173055.1
(22) Date of filing: 10.05.2021
(51) Int. Cl.: H04W 12/104, H04W 12/63, H04W 12/08

(54) **WIRELESS AUTOMATION NETWORK SOURCE AND DESTINATION DEVICE**
DRAHTLOSE AUTOMATISIERUNGSNETZWERKQUELLE UND ZIELVORRICHTUNG
DISPOSITIF SOURCE ET DESTINATION D'UN RÉSEAU D'AUTOMATISATION SANS FIL

(43) Date of publication of application: 16.11.2022
(73) Proprietor: ABB Schweiz AG, 5400 Baden (CH)
(72) Inventor: PANG, Zhibo, 72240 Västerås (SE); ISAKSSON, Alf, 723 53 Västerås (SE)
(74) Representative: Maiwald GmbH

(56) References cited:
- US-A1- 2017 195 826

## Description

### FIELD OF THE INVENTION

The invention relates to a wireless automation network (WAN) source device, a WAN destination device, a WAN system, a WAN, device comprising the source device and the destination device, a method for communication and localization in a WAN, and a usage of a WAN destination and/or source device for authenticated wireless communication and for wireless localization.

### BACKGROUND

Location information is broadly needed in industrial automation systems e.g. for personnel and asset tracking, engineering and maintenance, access control, control of mobile equipment, security surveillance, safety patrol, evacuation and rescue, etc. Accurate location information can also be used to improve the security of wireless communication from the physical layer to complement the traditional cryptography base security mechanisms, because any spoofing of the signal will increase extra delay, which will be noticed easily by detecting the abnormal change of distance/location. Today, adding and processing location information are implemented in higher-level automation applications on a case-by-case basis instead of in the WAN. To do this, an extra cross-layer interface is needed for the automation applications to access the location information from the bottom of a WAN interface, but such a cross-layer design is not recommended due to the lack of a standard and violation to the layer-based design principal of communication stacks. More importantly, many end users of the devices do not want to share the location information to certain applications due to privacy concerns. US 2017/0195826 A1 describes a method for verifying trustworthiness of a data packet routed over several hops in an identity anonymous wireless sensor network, where sender and receiver locations are required for the verification.

### SUMMARY OF THE INVENTION

It may be an objective of the invention to provide an improved system and method for transmitting location information in industrial automation systems.

The problem is solved by the subject-matter of the independent claims. Embodiments are provided by the dependent claims, the following description and the accompanying figures.

The described embodiments similarly pertain to the WAN source device, the WAN destination device, the WAN system comprising the source device and the destination device, the method for communication and localization in a WAN, and the usage of a WAN destination and/or source device for authenticated wireless communication and for wireless localization. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a wireless automation network (WAN) source device is provided, wherein the WAN source device is configured to generate a WAN data packet containing a payload with automation data according to a WAN communication protocol and an application packet, and to transmit the WAN data packet to a WAN destination device; wherein the WAN source device comprises:
a wireless localization engine;
a destination location generator;
a source location authorizer; and
an application packet wrapper;
   wherein
the source location authorizer is configured to provide an information whether the destination location generator and the wireless localization engine are authorized for accessing location information;
if said authorization for accessing the location information is permitted then:
   said wireless localization engine is configured to generate a source location stamp;
   said destination location generator is configured to receive the source location stamp and generate a destination location stamp based on the received source location stamp;
   the destination location generator and the wireless localization engine are configured to add a corresponding valid flag of the source and destination location stamps for indicating whether the source and destination stamps are valid due to the authorization for accessing the location information;
   the application packet wrapper is configured to encode the source location stamp, the destination location stamp and the valid flag in an application packet, and is further configured to output the application packet.

According to an embodiment, the WAN source device further comprises a WAN packet wrapper as a second data wrapper configured to encode the source location stamp, the destination location stamp and the valid flag into the WAN data packet and to output the WAN data packet.

According to an embodiment, the WAN source device further comprises an automation application layer (AAL) and a WAN communication layer (WCL); wherein the WAN wrapper and the wireless localization engine are part of the WAN communication layer; and
the destination location generator, the source location authorizer; and the application packet wrapper are part of the automation application layer.

According to an embodiment, the source location authorizer is configured to authorize the application packet wrapper, or the WAN packet wrapper, or both to encode the source location stamp and the destination location stamp.

The automation data may be data of an industrial process that is collected, for example, by an industrial sensor. The wireless localization engine may determine the location using devices or methods known to a skilled person, for example, by a triangulation method using run times of electromagnetic waves, signal strength, reception directivities, etc. The WAN source device therefore is enabled to transmit a location information using the packets that also contain the data payload. The location stamp comprises at least a location information or location value. More details are given further below.

The source location stamp and the destination location stamp can be either inserted into the packet generated in the AAL, or to the packet generated in the WCL, or both. Consequently, in the WAN packet to be transmitted, it is contained once or twice. If it is inserted in the AAL, this resulting application packet including the location stamp is packed as a payload into the WAN packet.

The control of the access may be performed by the wireless localization engine itself according to an information obtained from the authorizer. The information may be an authorization information to allow access from the AAL and a separate authorization information to allow access from the WCL, or a single information, in case there is only one layer, or in case, the layers are treated the same way.

The authorizer may further be configured to provide the authorization information to the destination location generator. In this way, the destination location generator is enabled to include a valid information, e.g., a valid flag, whether the respective location information is valid into the destination time stamp. Instead of a valid flag, the validity of the location information may be detectable by the value(s) of the location stamps. For example, a default value of zero may indicate a non-valid value.

The source location stamp may hence comprise a field with the source location value, and a further field with the source location stamp validity information. It may further comprise a location accuracy information. The field for the locations value may be initialized with a default value, for example zero or a random value.

The authorizer therefore ensures privacy requirements on both AAL and WCL level.

According to a further aspect, a wireless automation network destination device is provided, wherein the WAN destination device is configured to receive a WAN data packet according to a WAN communication protocol comprising a payload with automation data and an application packet, wherein the WAN data packet contains further a source location stamp and a destination location stamp; and wherein the WAN destination device comprises
a WAN packet parser;
an application packet parser;
a wireless localization engine configured to generate a local destination location stamp;
a destination location authorizer configured to provide information whether the WAN packet parser and the application packet parser are authorized to access the wireless localization engine for receiving the locally generated destination location stamp, and if the authorization is valid then:
   the wireless localization engine is configured to insert a valid flag according to the access authorization in the locally generated destination location stamp;
   the WAN packet parser is configured
      to receive the locally generated destination location stamp from the wireless localization engine;
      to compare the destination location stamp in the received WAN data packet with the locally generated destination location stamp received from the wireless localization engine; and, if the comparison does not match then:
         to discard the WAN data packet;
and if the comparison matches then:
to forward the WAN data packet to the application packet parser that is configured to extract the payload and the source location stamp from said WAN data packet.

According to an embodiment, the application packet parser is a second packet parser configured to
receive the WAN data packet from the WAN packet parser;
parse the application packet and to compare the destination location stamp in the received application packet with the locally generated destination location stamp received from the wireless localization engine and,
if the comparison does not match, to discard the application packet.

According to an embodiment, the WAN destination device further comprises a WAN communication layer, WCL, and an automation application Layer (AAL); and wherein the WAN packet parser and the wireless localization engine are part of the WAN communication layer, and the destination location authorizer and the application packet parser are part of the WAN communication layer.

According to an embodiment, the destination location authorizer is configured to authorize the application packet parser, or the WAN packet parser, or both to encode the destination location stamp.

According to an embodiment, the received source location stamp and destination location stamp each comprise an accuracy information, wherein the accuracy information specifies an accuracy to be taken into account for determining a match of the source location values and / or destination location values.

The received source location stamp contains location information about the source device, and the received destination location stamp contains location information about the destination device. The location information may be provided to further modules in the WAN. The location information about the destination device is not an actual position of the destination device but may indicate a target position or region at / in which the destination may be allowed to extract the payload from the message. The location information about the source device is the actual position of the source device.

The received source location value contained in the source location stamp may preferably be an absolute 2D or 3D position. The received destination location value contained in the destination location stamp may be an absolute position, a relative position or preferably a distance, i.e. a 1D relative position, indicating an allowed radius around the source location. The locally generated destination location value may preferably be an absolute position.

The parsers perform the inverse operation of the wrappers in the source device. Further, they check whether the destination device is located at an allowed position for extracting and forwarding the payload data and or the received location information.

The control of the access may be performed by the wireless localization engine itself according to the information obtained from the authorizer. The information may be an authorization information to allow access from the AAL and a separate authorization information to allow access from the WCL. The authorizer therefore ensures so that privacy requirements is ensured on both AAL and WCL level.

The locally generated destination location stamp may comprise further, i.e., apart from the destination location value, the destination location stamp validity information. A validity of the source location value and/or the destination location value is related to the validity information.

There are several options how to proceed in the case of a false flag. For example, the comparison of the location values is skipped, or the packet may be discarded.

According to an aspect, a wireless automation network, WAN, system is provided, comprising a WAN source device and a WAN destination device as described herein.

According to a further aspect, a wireless automation network, WAN, device is provided comprising a WAN source device and a WAN destination device as described herein, where the WAN device is a physical device, and the WAN source device and WAN destination device are logical devices. This allows having a bi-directional physical device, comprising a transmitting and receiving part.

According to a further aspect, a method for communication and localization in a wireless automation network, WAN, device, is provided,
wherein the WAN comprises:
   a WAN packet parser;
   an application packet parser;
   a wireless localization engine; and
   a destination location authorizer;
comprising the steps of:
   generating, by the wireless localization engine a local destination location stamp;
   providing, by the destination location authorizer, information whether the WAN packet parser and the application packet parser are authorized to access the wireless localization engine for receiving the locally generated destination location stamp, and if the authorization is valid then:
      inserting, by the wireless localization engine, a valid flag according to the access authorization in the locally generated destination location stamp;
      receiving, by the WAN packet parser, the locally generated destination location stamp from the wireless localization engine and a WAN data package;
      comparing, by the WAN packet parser, the destination location stamp in the received packet with the localized generated destination location stamp received from the wireless localization engine and, if the comparison does not match then:
         discarding, by the WAN packet parser, the WAN data packet;
and if the comparison matches then:
   forwarding, by the WAN packet parser, the WAN data packet to the application packet parser; and
   extracting, by the application packet parser, the payload and the source location stamp from said WAN data packet.

According to a further aspect, a method for communication and localization in a wireless automation network, WAN, is provided wherein the WAN comprises:
a wireless localization engine;
a destination location generator;
and a source location authorizer; and
an application packet wrapper; comprising the steps of:
   providing, by the source location authorizer, an information whether the destination location generator and the wireless localization engine are authorized for accessing the location information;
   if said authorization for accessing the location information is permitted then:
      generating, by the wireless localization engine a source location stamp;
      receiving, by the destination location generator, the source location stamp and generating a destination location stamp based on the received source location stamp;
      adding, by the destination location generator and the wireless localization engine a corresponding valid flag of the source and destination location stamps for indicating whether the source location stamps are valid due to the authorization for accessing the location information;
      encoding, by the application packet wrapper, the source location stamp, the destination location stamp and the valid flag into the application packet, and outputting the application packet.

A usage of wireless automation network, WAN, destination device for authenticated wireless communication and for wireless localization may be provided. That is, the location information may be used for authentication, and for providing location information. The source device may retrieve its own location information. The destination device may retrieve its own location information and location information of the source device.

The method may be performed by a program element running on a processor or a controller. The program element when being executed by the processor or controller, instructs the destination device to perform the steps of the method. Similarly, the source device may be realized by program element, and a processor or controller on which the program element runs, instructs the source device to perform the functions and methods of the source device to generate and transmit a WAN packet as described herein. The program element may be part of a computer program, but it can also be an entire program by itself. For example, the computer program element may be used to update an already existing computer program to get to the present invention.

The WAN may be based on, e.g. WiFi 802.11az, 3GPP 5G NR release 17, IEEE802.15.4z UWB or other suitable wireless protocols or standards.

The controller may comprise circuits without programmable logics or may be or comprise a micro controller, a field programmable gate array (FPGA), an ASIC, a Complex Programmable Logic Device (CPLD), or any other programmable logic devices known to person skilled in the art. The program element is stored on a computer readable medium. The computer readable medium may be seen as a storage medium, such as for example, a USB stick, a CD, a DVD, a data storage device, a hard disk, or any other medium on which a program element as described above can be stored.

Aspects and advantages of the present invention will become better understood with reference to the accompanying figure and the following description.

### SHORT DESCRIPTION OF THE FIGURES

Fig. 1 shows a block diagram of a wireless automation network system according to an embodiment,
Fig. 2 shows a diagram of a message structure according to an embodiment,
Fig. 3 shows a flow diagram of a method in the wireless automation network according to an embodiment,
Fig. 4 shows a flow diagram of a method in the wireless automation network destination device.

The figures are merely schematic and not to scale. In principle, identical or similar parts are given the same reference signs.

### DETAILED DESCRIPTION OF EMBODIMENTS

For each communication link, a pair of logical devices, a source device, also designated as "link source" in the following and a destination device, also designated as "link destination" in the following, are equipped with the functionalities not only for wireless communication but also for wireless localization. The location information is added to the communication packets and the communication packets are processed based on not only the network addresses but also the location stamps.

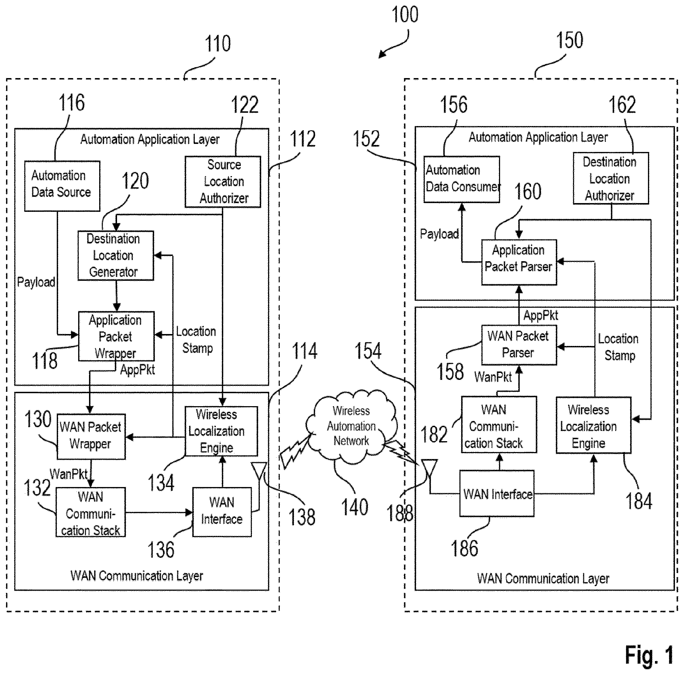

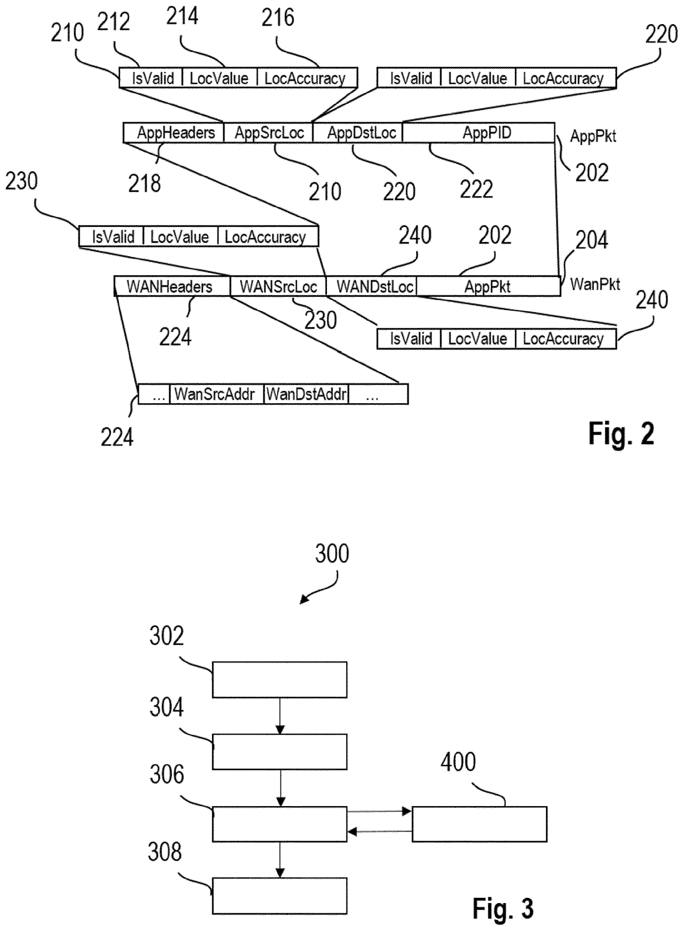

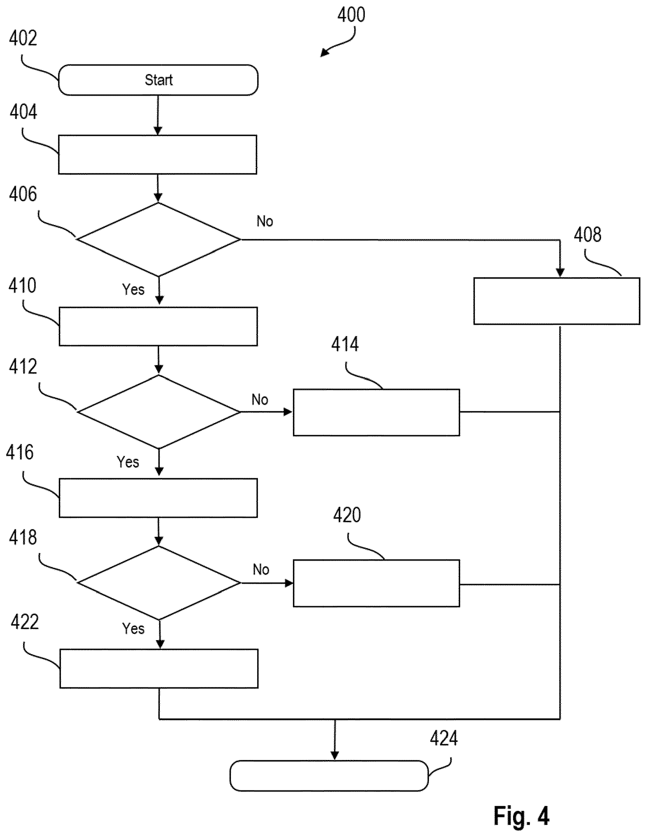

Fig. 1 shows a diagram of the source device 110 and the destination device 150 with their functional units that are described in the following. The structure of the packets is shown in Fig. 2. The explanations referring to Fig. 3 focus on the packet structure and the processing of the packets. Fig. 4 describes a method for decoding the WAN packet in the destination device 150.

Now referring to Fig. 1, the source device 110 comprises two software layers: the first layer is the automation application layer 112. The second layer is the communication layer 114. The automation data source 116 provides automation data as payload to the application packet wrapper 118. The wireless localization engine 134 located in the communication layer 114 generates a source location stamp and a destination location generator 120 receives the source location stamp and generates a destination location stamp based on the received source location stamp. Both location stamps are provided to the application packet wrapper 118. The source location authorizer 122 provides an information whether an access to the location information is allowed to the destination location generator 120 and to the wireless localization engine 134. The destination location generator 120 and the wireless localization engine 134 add a corresponding valid flag to the source and destination location stamps for indicating whether the source location stamps are valid due to the authorization. The application packet wrapper 118 encodes the location stamps and the payload and outputs an application packet. The WAN packet wrapper 130 in the communication layer 144 receives the application packet and further receives also the location stamp including a valid flag from the wireless localization engine 134 and the destination location generator 120. The WAN packet wrapper 130 then encodes the application packet and the location stamps including the valid flag, and outputs a WAN packet. The WAN packet wrapper sends generated WAN packet over WAN communication stack 132 to the WAN interface 136, so that the packet can be sent as a signal via antenna 138 over the wireless automation network 140 to the antenna of the WAN destination device 150.

The insertion of the location stamp may be performed as described above in both layers or either in the automation application layer or in the WAN communication layer. The processing of locations stamps in the AAL and WCL is determined (i.e. enabled or disabled) according to the configuration of the source location authorizer 122 in the source device 110, and the destination location authorizer and destination device 150, respectively. The packet processing and the valid flag mechanism is described in more detail at hand of Figs. 3 and 4 below.

In the destination device 150, antenna 188 receives the signal with the transmitted packet and provides the signal to the WAN interface 186, where the signal is demodulated. The WAN interface 186 then sends the demodulated signal with the packet to the WAN communication stack 182, which decodes the packet and passes it to the WAN packet parser 158. The destination location authorizer 162 provides an information whether the WAN packet parser 158 and/or the application packet parser 160 are allowed or authorized to access the wireless localization engine 184 for receiving the locally generated destination location stamp. If yes, the wireless localization engine 184 inserts the localization value, an accuracy value and a valid flag according to the access authorization in the locally generated destination location stamp, the WAN packet parser 158 receives the locally generated destination location stamp from the wireless localization engine 184. The WAN packet parser 158 parses the packet and compares the location stamp in the received packet with the locally generated destination location stamp received from the wireless localization engine 184. The WAN packet parser 158 compares the WAN location stamps, if all valid flags are true. If the location stamps do not match, the WAN packet parser 158 discards the packet. Otherwise, the WAN packet parser 158 forwards the parsed packet to the application packet parser 160 that extracts the payload and the source location stamp. If the application location stamp valid flag and the extracted application location stamp valid flag are set to true, the application packet parser 160 can compare the location values. If the location stamps do not match it discards the packet. The automation data consumer 165 receives finally the payload. Further, the location values may be provided to other devices in the WAN. The location values may also be sent to a server or into a cloud.

The structure of the WAN packet (WanPkt) processed in the communication layer and the application packet (AppPkt) processed in the application layer are illustrated in Fig 2. The application packet 202 comprises a header field 218, the source location stamp field 210, the destination location stamp field 220, and a payload field 222. The source location stamp field 210 and the destination location stamp field 220 each contain a field for the valid flag 212, the location value 214, and the location accuracy 216. Similarly, the WAN packet 204 comprises a header field 224, a source and a destination location stamp field 230, 240 and the above described application packet field 202. The header field 224 contains the WAN source address and the WAN destination address. Hence, the traditional network addresses (WanSrcAddr and WanDstAddr) are still available in the WAN packet 104, which can be e.g. the MAC (medium access control) address and/or IP (internet protocol) address.

The location stamps are specified in three fields:
IsValid 212, herein also referred to as (location) valid flag: when true, the location stamp is valid, e.g. if the AAL or WAN is authorized to access the location information. When false, the location stamp is not valid e.g. if the AAL or WAN is not authorized to access the location information.

packet 204 to the link destination 150 through the WAN interface 136.

In a third step 306, in the wireless communication layer 114 of the Link Destination 150, the WAN Packet Parser 158 receives the WAN packet 204 from the WAN interface 186 through the WAN communication stack 182; retrieves the current location from the wireless localization Engine 184 if it is authorized. Then the WAN packet 204 is processed according to the flowchart 400 in the Fig 4. Optionally, the matching of destination location stamp (WanDstLoc 240 and source location stamp (WanSrcLoc) 230 can be applied independently, i.e., the link destination 150 can be configured to parse the WAN packet 204 according to the source location stamp (WanSrcLoc) 230, or according to the destination location stamp (WanDstLoc) 240, or both.

In a fourth step 308, in the automation application layer 112 of the link destination, the application packet parser receives the application packet 202 (AppPkt) from the wireless communication layer 114; retrieves the current location from its wireless communication layer 114 if it is authorized; then does location matching (i.e. compares the destination location stamp (AppDstLoc) 220 with the current location). If the matching result is true, the application payload (AppPld) 222 will be handed over to the application data consumer after removing the application headers (AppHeaders) 218, application source location stamp (AppSrcLoc) 210, and application destination location stamp (AppDstLoc) 220. Otherwise, the application packet (AppPkt) 202 is discarded.

Fig 4. shows a method 400 for communication and localization in a wireless automation network, WAN. The method 400 starts at 402. In step 404, a WAN destination address is compared with a local WAN address. In 406 it is checked whether they match. If not, the method continues processing 408 according to the communication protocol. If yes, the WAN destination location value of the location stamp is compared 410 with a location value of the device. In 412 it is checked 412 whether they match. If not, the WAN data packet is discarded 414 and the method returns 424. If yes, the WAN source location value is compared 416 with a configured source location value. In 418 it is checked 418 whether they match. If not, the WAN data packet is discarded 420 and the method returns 424. If yes, the payload is forwarded 422 as application packet to the automation application layer and the method returns 424.

Optionally, the authorizations to access location information at automation application layer 112, 152 and wireless communication layer 114, 154 are independent. In a preferred packet 204 to the link destination 150 through the WAN interface 136.

In a third step 304, in the wireless communication layer 114 of the Link Destination 150, the WAN Packet Parser 158 receives the WAN packet 204 from the WAN interface 186 through the WAN communication stack 182; retrieves the current location from the wireless localization Engine 184 if it is authorized. Then the WAN packet 204 is processed according to the flowchart 400 in the Fig 4. Optionally, the matching of destination location stamp (WanDstLoc 240 and source location stamp (WanSrcLoc) 230 can be applied independently, i.e., the link destination 150 can be configured to parse the WAN packet 204 according to the source location stamp (WanSrcLoc) 230, or according to the destination location stamp (WanDstLoc) 240, or both.

In a fourth step 308, in the automation application layer 112 of the link destination, the application packet parser receives the application packet 202 (AppPkt) from the wireless communication layer 114; retrieves the current location from its wireless communication layer 114 if it is authorized; then does location matching (i.e. compares the destination location stamp (AppDstLoc) 220 with the current location). If the matching result is true, the application payload (AppPld) 222 will be handed over to the application data consumer after removing the application headers (AppHeaders) 218, application source location stamp (AppSrcLoc) 210, and application destination location stamp (AppDstLoc) 220. Otherwise, the application packet (AppPkt) 202 is discarded.

Fig 4. shows a method 400 for communication and localization in a wireless automation network, WAN. The method 400 starts at 402. In step 404, a WAN destination address is compared with a local WAN address. In 406 it is checked whether they match. If not, the method continues processing 408 according to the communication protocol. If yes, the WAN destination location value of the location stamp is compared 410 with a location value of the device. In 412 it is checked 412 whether they match. If not, the WAN data packet is discarded 414 and the method returns 424. If yes, the WAN source location value is compared 416 with a configured source location value. In 418 it is checked 418 whether they match. If not, the WAN data packet is discarded 420 and the method returns 424. If yes, the payload is forwarded 422 as application packet to the automation application layer and the method returns 424.

Optionally, the authorizations to access location information at automation application layer 112, 152 and wireless communication layer 114, 154 are independent. In a preferred embodiment, only the wireless communication layer 114, 154 is authorized to access the location information, which will largely reduce the concern about privacy when, for example, wearable or portable devices are used to track the location of personnel. As further options, a physical device can include both the link source 110 and the link destination 150 functionalities for two-way communication, or only one of them for one-way communication. As specific embodiments, the automation application layer processing and wireless communication layer processing of location stamps can be implemented independently, i.e. it is possible to implement only one of two layers or the both layers.

The invention allows reducing the complexity in control applications to utilize the native localization capability of the new generation wireless infrastructure e.g. 5G and WiFi. Costs for dedicated localization infrastructure. Further, the concern about privacy when wearable or portable devices are used to track personnel location is reduced.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. A wireless automation network, WAN, source device (110), wherein the WAN source device (110) is configured to generate a WAN data packet containing a payload with automation data according to a WAN communication protocol and an application packet, and to transmit the WAN data packet to a WAN destination device (150); wherein the WAN source device (110) comprises:
a wireless localization engine (134);
a destination location generator (120);
a source location authorizer (122); and
an application packet wrapper (118);
wherein
the source location authorizer (122) is configured to provide an information whether the destination location generator (120) and the wireless localization engine (134) are authorized for accessing location information;
if said authorization for accessing the location information is permitted then:
said wireless localization engine (134) is configured to generate a source location stamp;
said destination location generator (120) is configured to receive the source location stamp and generate a destination location stamp based on the received source location stamp;
the destination location generator (120) and the wireless localization engine (134) are configured to add a corresponding valid flag of the source and destination location stamps for indicating whether the source and destination stamps are valid due to the authorization for accessing the location information;
the application packet wrapper (118) is configured to encode the source location stamp, the destination location stamp and the valid flag in an application packet, and is further configured to output the application packet.

2. The WAN source device (110) according to claim 1, wherein the WAN source device (110) further comprises a WAN packet wrapper (130) as a second data wrapper configured to encode the source location stamp, the destination location stamp and the valid flag into the WAN data packet and to output the WAN data packet.

3. The WAN source device (110) according to claim 2, wherein the WAN source device (110) further comprises an automation application layer (112), AAL and a WAN communication layer (114), WCL; wherein the WAN wrapper (130) and the wireless localization engine (134) are part of the WAN communication layer; and
the destination location generator (120), the source location authorizer (122); and the application packet wrapper (118) are part of the automation application layer.

4. The WAN source device (110) according to claim 2 or 3, wherein the source location authorizer (122) is configured to authorize the application packet wrapper (118), or the WAN packet wrapper (130), or both to encode the source location stamp and the destination location stamp.

5. A wireless automation network destination device (150), wherein the WAN destination device (150) is configured to receive a WAN data packet according to a WAN communication protocol comprising a payload with automation data and an application packet, wherein the WAN data packet contains further a source location stamp and a destination location stamp; and wherein the WAN destination device (150) comprises
a WAN packet parser (158);
an application packet parser (160);
a wireless localization engine (184) configured to generate a local destination location stamp;
a destination location authorizer (162) configured to provide information whether the WAN packet parser (158) and the application packet parser (160) are authorized to access the wireless localization engine (184) for receiving the locally generated destination location stamp, and if the authorization is valid then:
the wireless localization engine (184) is configured to insert a valid flag according to the access authorization in the locally generated destination location stamp;
the WAN packet parser (158) is configured
to receive the locally generated destination location stamp from the wireless localization engine (184);
to compare the destination location stamp in the received WAN data packet with the locally generated destination location stamp received from the wireless localization engine (184); and, if the comparison does not match then:
to discard the WAN data packet;
and if the comparison matches then:
to forward the WAN data packet to the application packet parser (160) that is configured to extract the payload and the source location stamp from said WAN data packet.

6. The WAN destination device (150) according to claim 5, wherein the application packet parser (160) is a second packet parser configured to
receive the WAN data packet from the WAN packet parser (158);
parse the application packet and to compare the destination location stamp in the received application packet with the locally generated destination location stamp received from the wireless localization engine (184) and,
if the comparison does not match, to discard the application packet.

7. The WAN destination device (150) according to claim 6, wherein the WAN destination device (110) further comprises a WAN communication layer (154), WCL, and an automation application Layer, AAL, (152); and wherein the WAN packet parser (130) and the wireless localization engine (184) are part of the WAN communication layer, and the destination location authorizer (162) and the application packet parser (160) are part of the WAN communication layer.

8. The WAN destination device (150) according to any of claims 5 to 7, wherein the destination location authorizer (162) is configured to authorize the application packet parser (160), or the WAN packet parser (130), or both to encode the destination location stamp.

9. The WAN destination device (150) according to any of claims 5 to 8, wherein the received source location stamp and destination location stamp each comprise an accuracy information, wherein the accuracy information specifies an accuracy to be taken into account for determining a match of the source location values and / or destination location values.

10. A wireless automation network, WAN, system (100) comprising a WAN source device (110) according to any of claims 1 to 4 and a WAN destination device (150) according to any of claims 5 to 9.

11. A wireless automation network, WAN, device (100) comprising a WAN source device (110) according to any of claims 1 to 4 and a WAN destination device (150) according to any of claims 5 to 9, wherein the WAN device (100) is a physical device, and the WAN source device (110) and WAN destination device (150) are logical devices.

12. A method for communication and localization in a wireless automation network WAN, wherein the WAN comprises:
a WAN packet parser (158);
an application packet parser (160);
a wireless localization engine (184); and
a destination location authorizer (162);
comprising the steps of:
generating, by the wireless localization engine (184) a local destination location stamp;
providing, by the destination location authorizer (162), information whether the WAN packet parser (158) and the application packet parser (160) are authorized to access the wireless localization engine (184) for receiving the locally generated destination location stamp, and if the authorization is valid then:
inserting, by the wireless localization engine (184), a valid flag according to the access authorization in the locally generated destination location stamp;
receiving, by the WAN packet parser (158), the locally generated destination location stamp from the wireless localization engine (184) and a WAN data package;
comparing, by the WAN packet parser (158), the destination location stamp in the received packet with the localized generated destination location stamp received from the wireless localization engine (184) and, if the comparison does not match then:
discarding, by the WAN packet parser (158), the WAN data packet;
and if the comparison matches then:
forwarding, by the WAN packet parser (158), the WAN data packet to the application packet parser (160); and
extracting, by the application packet parser (160), the payload and the source location stamp from said WAN data packet.

13. A method for communication and localization in a wireless automation network, WAN, wherein the WAN comprises:
a wireless localization engine (134);
a destination location generator (120);
and a source location authorizer (122); and
an application packet wrapper (118); comprising the steps of:
providing, by the source location authorizer (122), an information whether the destination location generator (120) and the wireless localization engine (134) are authorized for accessing the location information;
if said authorization for accessing the location information is permitted then:
generating, by the wireless localization engine (134) a source location stamp;
receiving, by the destination location generator (120), the source location stamp and generating a destination location stamp based on the received source location stamp;
adding, by the destination location generator (120) and the wireless localization engine (134) a corresponding valid flag of the source and destination location stamps for indicating whether the source location stamps are valid due to the authorization for accessing the location information;
encoding, by the application packet wrapper (118), the source location stamp, the destination location stamp and the valid flag into the application packet, and outputting the application packet.

## Patentansprüche

1. Drahtloses Automatisierungsnetzwerk-Quellgerät, WAN-Quellgerät (110), wobei das WAN-Quellgerät (110) dazu eingerichtet ist, ein WAN-Datenpaket zu erzeugen, das eine Nutzlast mit Automatisierungsdaten gemäß einem WAN-Kommunikationsprotokoll und einem Anwendungspaket enthält, und das WAN-Datenpaket an ein WAN-Zielgerät (150) zu übertragen; wobei das WAN-Quellgerät (110) umfasst:
- eine drahtlose Lokalisierungs-Engine (134);
- einen Zielpositionsgenerator (120);
- einen Quellpositions-Autorisierer (122); und
- einen Anwendungspaket-Wrapper (118);
wobei
der Quellpositions-Autorisierer (122) dazu eingerichtet ist, eine Information bereitzustellen, ob der Zielpositionsgenerator (120) und die drahtlose Lokalisierungs-Engine (134) zum Zugriff auf Positionsinformationen autorisiert sind;
falls die Autorisierung für den Zugriff auf die Positionsinformationen erteilt ist, dann:
die drahtlose Lokalisierungs-Engine (134) dazu eingerichtet ist, einen Quellpositionsstempel zu erzeugen;
der Zielpositionsgenerator (120) dazu eingerichtet ist, den Quellpositionsstempel zu empfangen und basierend auf dem empfangenen Quellpositionsstempel einen Zielpositionsstempel zu erzeugen;
der Zielpositionsgenerator (120) und die drahtlose Lokalisierungs-Engine (134) dazu eingerichtet sind, eine entsprechende Gültigkeitsmarkierung der Quell- und Zielpositionsstempel hinzuzufügen, um anzuzeigen, ob die Quell- und Zielpositionsstempel aufgrund der Autorisierung für den Zugriff auf die Positionsinformationen gültig sind;
der Anwendungspaket-Wrapper (118) dazu eingerichtet ist, den Quellpositionsstempel, den Zielpositionsstempel und die Gültigkeitsmarkierung in einem Anwendungspaket zu kodieren und das Anwendungspaket auszugeben.

2. WAN-Quellgerät (110) nach Anspruch 1, wobei das WAN-Quellgerät (110) ferner einen WAN-Paket-Wrapper (130) als einen zweiten Daten-Wrapper umfasst, der dazu eingerichtet ist, den Quellpositionsstempel, den Zielpositionsstempel und die Gültigkeitsmarkierung in das WAN-Datenpaket zu kodieren und das WAN-Datenpaket auszugeben.

3. WAN-Quellgerät (110) nach Anspruch 2, wobei das WAN-Quellgerät (110) ferner eine Automatisierungsanwendungsschicht (112), AAL, und eine WAN-Kommunikationsschicht (114), WCL, umfasst; wobei der WAN-Wrapper (130) und die drahtlose Lokalisierungs-Engine (134) Teil der WAN-Kommunikationsschicht sind; und der Zielpositionsgenerator (120), der Quellpositions-Autorisierer (122) sowie der Anwendungspaket-Wrapper (118) Teil der Automatisierungsanwendungsschicht sind.

4. WAN-Quellgerät (110) nach Anspruch 2 oder 3, wobei der Quellpositions-Autorisierer (122) dazu eingerichtet ist, den Anwendungspaket-Wrapper (118) oder den WAN-Paket-Wrapper (130) oder beide zu autorisieren, den Quellpositionsstempel und den Zielpositionsstempel zu kodieren.

5. Drahtloses Automatisierungsnetzwerk-Zielgerät (150), wobei das WAN-Zielgerät (150) dazu eingerichtet ist, ein WAN-Datenpaket gemäß einem WAN-Kommunikationsprotokoll zu empfangen, das eine Nutzlast mit Automatisierungsdaten und ein Anwendungspaket umfasst, wobei das WAN-Datenpaket ferner einen Quellpositionsstempel und einen Zielpositionsstempel enthält; und wobei das WAN-Zielgerät (150) umfasst
- einen WAN-Paket-Parser (158);
- einen Anwendungspaket-Parser (160);
- eine drahtlose Lokalisierungs-Engine (184), die dazu eingerichtet ist, einen lokalen Zielpositionsstempel zu erzeugen;
- einen Zielpositions-Autorisierer (162), der dazu eingerichtet ist, Informationen bereitzustellen, ob der WAN-Paket-Parser (158) und der Anwendungspaket-Parser (160) zum Zugriff auf die drahtlose Lokalisierungs-Engine (184) für den Empfang des lokal erzeugten Zielpositionsstempels autorisiert sind, und falls die Autorisierung gültig ist, dann:
ist die drahtlose Lokalisierungs-Engine (184) dazu eingerichtet , eine Gültigkeitsmarkierung entsprechend der Zugriffsautorisierung in den lokal erzeugten Zielpositionsstempel einzufügen;
ist der WAN-Paket-Parser (158) dazu eingerichtet ,
den lokal erzeugten Zielpositionsstempel von der drahtlosen Lokalisierungs-Engine (184) zu empfangen;
den Zielpositionsstempel im empfangenen WAN-Datenpaket mit dem lokal erzeugten Zielpositionsstempel, der von der drahtlosen Lokalisierungs-Engine (184) empfangen wurde, zu vergleichen; und, falls der Vergleich nicht übereinstimmt:
das WAN-Datenpaket zu verwerfen;
und falls der Vergleich übereinstimmt:
das WAN-Datenpaket an den Anwendungspaket-Parser (160) weiterzuleiten, der dazu eingerichtet ist, die Nutzlast und den Quellpositionsstempel aus dem WAN-Datenpaket zu extrahieren.

6. WAN-Zielgerät (150) nach Anspruch 5, wobei der Anwendungspaket-Parser (160) ein zweiter Paket-Parser ist, der dazu eingerichtet ist,
das WAN-Datenpaket vom WAN-Paket-Parser (158) zu empfangen,
das Anwendungspaket zu parsen und den Zielpositionsstempel im empfangenen Anwendungspaket mit dem lokal erzeugten Zielpositionsstempel, der von der drahtlosen Lokalisierungs-Engine (184) empfangen wurde, zu vergleichen und,
falls der Vergleich nicht übereinstimmt, das Anwendungspaket zu verwerfen.

7. WAN-Zielgerät (150) nach Anspruch 6, wobei das WAN-Zielgerät (150) ferner eine WAN-Kommunikationsschicht (154), WCL, und eine Automatisierungsanwendungsschicht (152), AAL, umfasst; und wobei der WAN-Paket-Parser (130) und die drahtlose Lokalisierungs-Engine (184) Teil der WAN-Kommunikationsschicht sind und der Zielpositions-Autorisierer (162) sowie der Anwendungspaket-Parser (160) Teil der WAN-Kommunikationsschicht sind.

8. WAN-Zielgerät (150) nach einem der Ansprüche 5 bis 7, wobei der Zielpositions-Autorisierer (162) dazu eingerichtet ist, den Anwendungspaket-Parser (160) oder den WAN-Paket-Parser (130) oder beide zu autorisieren, den Zielpositionsstempel zu kodieren.

9. WAN-Zielgerät (150) nach einem der Ansprüche 5 bis 8, wobei der empfangene Quellpositionsstempel und der Zielpositionsstempel jeweils eine Genauigkeitsinformation umfassen, wobei die Genauigkeitsinformation eine Genauigkeit angibt, die bei der Bestimmung einer Übereinstimmung der Quellpositionswerte und/oder Zielpositionswerte zu berücksichtigen ist.

10. Drahtloses Automatisierungsnetzwerk-System, WAN-System, (100), umfassend ein WAN-Quellgerät (110) nach einem der Ansprüche 1 bis 4 und ein WAN-Zielgerät (150) nach einem der Ansprüche 5 bis 9.

11. Drahtloses Automatisierungsnetzwerkgerät, WAN-Gerät (100), umfassend ein WAN-Quellgerät (110) nach einem der Ansprüche 1 bis 4 und ein WAN-Zielgerät (150) nach einem der Ansprüche 5 bis 9, wobei das WAN-Gerät (100) ein physisches Gerät ist und das WAN-Quellgerät (110) sowie das WAN-Zielgerät (150) logische Geräte sind.

12. Verfahren zur Kommunikation und Lokalisierung in einem drahtlosen Automatisierungsnetzwerk, WAN, wobei das WAN umfasst:
- einen WAN-Paket-Parser (158);
- einen Anwendungspaket-Parser (160);
- eine drahtlose Lokalisierungs-Engine (184); und
- einen Zielpositions-Autorisierer (162);
umfassend die Schritte:
Erzeugen eines lokalen Zielpositionsstempels durch die drahtlose Lokalisierungs-Engine (184);
Bereitstellen von Informationen durch den Zielpositions-Autorisierer (162), ob der WAN-Paket-Parser (158) und der Anwendungspaket-Parser (160) zum Zugriff auf die drahtlose Lokalisierungs-Engine (184) für den Empfang des lokal erzeugten Zielpositionsstempels autorisiert sind, und falls die Autorisierung gültig ist, dann:
Einfügen einer Gültigkeitsmarkierung entsprechend der Zugriffsautorisierung in den lokal erzeugten Zielpositionsstempel durch die drahtlose Lokalisierungs-Engine (184);
Empfangen des lokal erzeugten Zielpositionsstempels von der drahtlosen Lokalisierungs-Engine (184) und eines WAN-Datenpakets durch den WAN-Paket-Parser (158);
Vergleichen des Zielpositionsstempels im empfangenen Paket mit dem lokal erzeugten Zielpositionsstempel, der von der drahtlosen Lokalisierungs-Engine (184) empfangen wurde, durch den WAN-Paket-Parser (158) und, falls der Vergleich nicht übereinstimmt:
Verwerfen des WAN-Datenpakets durch den WAN-Paket-Parser (158);
und falls der Vergleich übereinstimmt:
Weiterleiten des WAN-Datenpakets an den Anwendungspaket-Parser (160) durch den WAN-Paket-Parser (158); und
Extrahieren der Nutzlast und des Quellpositionsstempels aus dem WAN-Datenpaket durch den Anwendungspaket-Parser (160).

13. Verfahren zur Kommunikation und Lokalisierung in einem drahtlosen Automatisierungsnetzwerk, WAN, wobei das WAN umfasst:
- eine drahtlose Lokalisierungs-Engine (134);
- einen Zielpositionsgenerator (120);
- einen Quellpositions-Autorisierer (122); und
- einen Anwendungspaket-Wrapper (118);
umfassend die Schritte:
Bereitstellen einer Information durch den Quellpositions-Autorisierer (122), ob der Zielpositionsgenerator (120) und die drahtlose Lokalisierungs-Engine (134) zum Zugriff auf die Positionsinformationen autorisiert sind;
falls die Autorisierung für den Zugriff auf die Positionsinformationen erteilt ist, dann:
Erzeugen eines Quellpositionsstempels durch die drahtlose Lokalisierungs-Engine (134);
Empfangen des Quellpositionsstempels durch den Zielpositionsgenerator (120) und Erzeugen eines Zielpositionsstempels basierend auf dem empfangenen Quellpositionsstempel;
Hinzufügen einer entsprechenden Gültigkeitsmarkierung der Quell- und Zielpositionsstempel durch den Zielpositionsgenerator (120) und die drahtlose Lokalisierungs-Engine (134) zur Anzeige, ob die Quellpositionsstempel aufgrund der Autorisierung für den Zugriff auf die Positionsinformationen gültig sind;
Kodieren des Quellpositionsstempels, des Zielpositionsstempels und der Gültigkeitsmarkierung in das Anwendungspaket durch den Anwendungspaket-Wrapper (118) und Ausgeben des Anwendungspakets.

## Revendications

1. Dispositif source de réseau d'automatisation sans fil, WAN (110), dans lequel le dispositif source de réseau WAN (110) est configuré pour générer un paquet de données de réseau WAN contenant une charge utile avec des données d'automatisation selon un protocole de communication de réseau WAN et un paquet d'application, et pour transmettre le paquet de données de réseau WAN à un dispositif de destination de réseau WAN (150) ; dans lequel le dispositif source de réseau WAN (110) comprend :
un moteur de localisation sans fil (134) ;
un générateur de position de destination (120) ;
un dispositif d'autorisation de position source (122) ;
et
une enveloppe de paquet d'application (118) ;
dans lequel
le dispositif d'autorisation de position source (122) est configuré pour fournir des informations indiquant si le générateur de position de destination (120) et le moteur de localisation sans fil (134) sont autorisés à accéder à des informations de position ;
si ladite autorisation d'accès aux informations de position est autorisée, alors :
ledit moteur de localisation sans fil (134) est configuré pour générer une estampille de position source ;
ledit générateur de position de destination (120) est configuré pour recevoir l'estampille de position source et générer une estampille de position de destination sur la base de l'estampille de position source reçue ;
le générateur de position de destination (120) et le moteur de localisation sans fil (134) sont configurés pour ajouter un indicateur de validité correspondant des estampilles de position source et de destination pour indiquer si les estampilles source et de destination sont valides en raison de l'autorisation d'accès aux informations de position ;
l'enveloppe de paquet d'application (118) est configurée pour coder l'estampille de position source, l'estampille de position de destination et l'indicateur de validité dans un paquet d'application, et est également configurée pour délivrer le paquet d'application.

2. Dispositif source de réseau WAN (110) selon la revendication 1, dans lequel le dispositif source de réseau WAN (110) comprend en outre une enveloppe de paquet de réseau WAN (130) en tant que seconde enveloppe de données configurée pour coder l'estampille de position source, l'estampille de position de destination et l'indicateur de validité dans le paquet de données de réseau WAN et pour délivrer le paquet de données de réseau WAN.

3. Dispositif source de réseau WAN (110) selon la revendication 2, dans lequel le dispositif source de réseau WAN (110) comprend en outre une couche d'application d'automatisation (112), AAL, et une couche de communication de réseau WAN (114), WCL ; dans lequel l'enveloppe de réseau WAN (130) et le moteur de localisation sans fil (134) font partie de la couche de communication de réseau WAN ; et
le générateur de position de destination (120), le dispositif d'autorisation de position source (122) et l'enveloppe de paquet d'application (118) font partie de la couche d'application d'automatisation.

4. Dispositif source de réseau WAN (110) selon la revendication 2 ou 3, dans lequel le dispositif d'autorisation de position source (122) est configuré pour autoriser l'enveloppe de paquet d'application (118), ou l'enveloppe de paquet de réseau WAN (130), ou les deux, à coder l'estampille de position source et l'estampille de position de destination.

5. Dispositif de destination de réseau d'automatisation sans fil (150), dans lequel le dispositif de destination de réseau WAN (150) est configuré pour recevoir un paquet de données de réseau WAN selon un protocole de communication de réseau WAN comprenant une charge utile avec des données d'automatisation et un paquet d'application, dans lequel le paquet de données de réseau WAN contient en outre une estampille de position source et une estampille de position de destination ; et dans lequel le dispositif de destination de réseau WAN (150) comprend
un analyseur de paquets de réseau WAN (158) ;
un analyseur de paquets d'application (160) ;
un moteur de localisation sans fil (184) configuré pour générer une estampille de position de destination locale ;
un dispositif d'autorisation de position de destination (162) configuré pour fournir des informations indiquant si l'analyseur de paquets de réseau WAN (158) et l'analyseur de paquets d'application (160) sont autorisés à accéder au moteur de localisation sans fil (184) pour recevoir l'estampille de position de destination générée localement, et si l'autorisation est valide, alors :
le moteur de localisation sans fil (184) est configuré pour insérer un indicateur de validité en fonction de l'autorisation d'accès dans l'estampille de position de destination générée localement ;
l'analyseur de paquets de réseau WAN (158) est configuré pour recevoir l'estampille de position de destination générée localement depuis le moteur de localisation sans fil (184) ;
pour comparer l'estampille de position de destination dans le paquet de données de réseau WAN reçu avec l'estampille de position de destination générée localement reçue depuis le moteur de localisation sans fil (184) ; et si la comparaison ne correspond pas, alors :
pour supprimer le paquet de données de réseau WAN ;
et si la comparaison correspond, alors :
pour transmettre le paquet de données de réseau WAN à l'analyseur de paquets d'application (160) qui est configuré pour extraire la charge utile et l'estampille de position source dudit paquet de données de réseau WAN.

6. Dispositif de destination de réseau WAN (150) selon la revendication 5, dans lequel l'analyseur de paquets d'application (160) est un second analyseur de paquets configuré pour
recevoir le paquet de données de réseau WAN depuis l'analyseur de paquets de réseau WAN (158) ;
analyser le paquet d'application et comparer l'estampille de position de destination dans le paquet d'application reçu avec l'estampille de position de destination générée localement reçue depuis le moteur de localisation sans fil (184) et,
si la comparaison ne correspond pas, pour supprimer le paquet d'application.

7. Dispositif de destination de réseau WAN (150) selon la revendication 6, dans lequel le dispositif de destination de réseau WAN (110) comprend en outre une couche de communication de réseau WAN (154), WCL, et une couche d'application d'automatisation, AAL, (152) ; et dans lequel l'analyseur de paquets de réseau WAN (130) et le moteur de localisation sans fil (184) font partie de la couche de communication de réseau WAN, et le dispositif d'autorisation de position de destination (162) et l'analyseur de paquets d'application (160) font partie de la couche de communication de réseau WAN.

8. Dispositif de destination de réseau WAN (150) selon l'une quelconque des revendications 5 à 7, dans lequel le dispositif d'autorisation de position de destination (162) est configuré pour autoriser l'analyseur de paquets d'application (160), ou l'analyseur de paquets de réseau WAN (130), ou les deux à coder l'estampille de position de destination.

9. Dispositif de destination de réseau WAN (150) selon l'une quelconque des revendications 5 à 8, dans lequel l'estampille de position source et l'estampille de position de destination reçues comprennent chacune une information de précision, dans lequel l'information de précision spécifie une précision à prendre en compte pour déterminer une correspondance des valeurs de position source et/ou des valeurs de position de destination.

10. Système de réseau d'automatisation sans fil, WAN (100) comprenant un dispositif source de réseau WAN (110) selon l'une quelconque des revendications 1 à 4 et un dispositif de destination de réseau WAN (150) selon l'une quelconque des revendications 5 à 9.

11. Dispositif de réseau d'automatisation sans fil, WAN (100) comprenant un dispositif source de réseau WAN (110) selon l'une quelconque des revendications 1 à 4 et un dispositif de destination de réseau WAN (150) selon l'une quelconque des revendications 5 à 9, dans lequel le dispositif de réseau WAN (100) est un dispositif physique, et le dispositif source de réseau WAN (110) et le dispositif de destination de réseau WAN (150) sont des dispositifs logiques.

12. Procédé de communication et de localisation dans un réseau d'automatisation sans fil, WAN, dans lequel le réseau WAN comprend :
un analyseur de paquets de réseau WAN (158) ;
un analyseur de paquets d'application (160) ;
un moteur de localisation sans fil (184) ; et
un dispositif d'autorisation de position de destination (162) ;
comprenant les étapes suivantes :
la génération, par le moteur de localisation sans fil (184), d'une estampille de position de destination locale ;
la fourniture, par le dispositif d'autorisation de position de destination (162), d'informations indiquant si l'analyseur de paquets de réseau WAN (158) et l'analyseur de paquets d'application (160) sont autorisés à accéder au moteur de localisation sans fil (184) pour recevoir l'estampille de position de destination générée localement, et si l'autorisation est valide, alors :
l'insertion, par le moteur de localisation sans fil (184), d'un indicateur de validité en fonction de l'autorisation d'accès dans l'estampille de position de destination générée localement ;
la réception, par l'analyseur de paquets de réseau WAN (158), de l'estampille de position de destination générée localement depuis le moteur de localisation sans fil (184) et d'un paquet de données de réseau WAN ;
la comparaison, par l'analyseur de paquets de réseau WAN (158), de l'estampille de position de destination dans le paquet reçu avec l'estampille de position de destination générée localisée reçue depuis le moteur de localisation sans fil (184) et, si la comparaison ne correspond pas, alors :
la suppression, par l'analyseur de paquets de réseau WAN (158), du paquet de données de réseau WAN ;
et si la comparaison correspond, alors :
le transfert, par l'analyseur de paquets de réseau WAN (158), du paquet de données de réseau WAN à l'analyseur de paquets d'application (160) ; et
l'extraction, par l'analyseur de paquets d'application (160), de la charge utile et de l'estampille de position source dudit paquet de données de réseau WAN.

13. Procédé de communication et de localisation dans un réseau d'automatisation sans fil, WAN, dans lequel le réseau WAN comprend :
un moteur de localisation sans fil (134) ;
un générateur de position de destination (120) ;
et un dispositif d'autorisation de position source (122) ; et
une enveloppe de paquet d'application (118), comprenant les étapes suivantes :
la fourniture, par le dispositif d'autorisation de position source (122), d'informations indiquant si le générateur de position de destination (120) et le moteur de localisation sans fil (134) sont autorisés à accéder aux informations de position ;
si ladite autorisation d'accès aux informations de position est autorisée, alors :
la génération, par le moteur de localisation sans fil (134), d'une estampille de position source ;
la réception, par le générateur de position de destination (120), de l'estampille de position source et la génération d'une estampille de position de destination sur la base de l'estampille de position source reçue ;
l'ajout, par le générateur de position de destination (120) et le moteur de localisation sans fil (134), d'un indicateur de validité correspondant des estampilles de position source et de destination pour indiquer si les estampilles de position source sont valides en raison de l'autorisation d'accès aux informations de position ;
le codage, par l'enveloppe de paquet d'application (118), de l'estampille de position source, de l'estampille de position de destination et de l'indicateur de validité dans le paquet d'application, et la délivrance du paquet d'application.
